# EUROPEAN PATENT APPLICATION

(11) **EP 2 765 029 A1**
(43) Date of publication of application: **13.08.2014**
(21) Application number: 13187000.8
(22) Date of filing: 02.10.2013
(51) Int. Cl.: B60P 1/64, B62D 21/03, B62D 33/02

(54) **A trailer for use in road haulage and a method for using the trailer**

(30) Priority: 08.02.2013 NL 2010275
(71) Applicant: HFM Patenten BV, 9724 AK Groningen (NL)
(72) Inventor: Hofma, Gerrit Frits, 9724 AK Groningen (NL)
(74) Representative: Janssen, Paulus J. P.

(57) **Abstract**

The invention pertains to a trailer for use in road haulage, the trailer having a supporting frame for carrying a load, the frame having at a first lateral edge a first carrying arm for supporting the load, which arm extends from the frame, and at a second lateral edge opposite to the first lateral edge a second carrying arm for supporting the load, which arm extend from the frame, the first and second carrying arms being removably connected to the frame, the frame having at an upstream position of the first lateral edge, a first connection site for removably connecting the first carrying arm, and at a downstream position a second connection site for removably connecting the first carrying arm, and at an upstream position of the second lateral edge, corresponding to the upstream position of the first lateral edge, a first connection site for removably connecting the second carrying arm , and at a downstream position corresponding to the downstream position of the first lateral edge a second connection site for removably connecting this carrying arm, wherein the trailer is provided with a carriage that is movable along the supporting frame from the first connection sites to the second connection sites, which carriage is provided with means to guide the carrying arms from the first connection site to the second connection site. The invention also pertains to a method to use such a trailer.

## Description

### FIELD OF THE INVENTION

The present invention pertains to a trailer for use in road haulage, the trailer having a supporting frame for carrying a load, the frame having at a first lateral edge (i.e. adjacent that edge) a first carrying arm for supporting the load, which arm extends from the frame, and at a second lateral edge opposite to the first lateral edge a second carrying arm for supporting the load, which arm extends from the frame, the first and second carrying arms being removably connected to the frame. The invention also pertains to a method for using this trailer.

### BACKGROND ART

Trailers for use in road haulage exist in many forms. Common features of all trailers are a supporting frame (for supporting load, often conatiners), the frame being connected to wheeled axles for allowing road haulage of the frame. One of the used types of trailer is a so-called semi-trailer, which is a trailer without a front axle (as opposed to a full trailer having front and trailing end axles). A large proportion of its weight is supported by a road tractor, a detachable front axle assembly known as a dolly, or the tail of another trailer. A semi-trailer is normally equipped with landing gear (legs which can be lowered) to support it when it is uncoupled.

A road tractor coupled to a semi-trailer is often called a semi-trailer truck, simply "semi", or an articulated lorry (in particular in the UK). Various connecting means for connecting the trailer to the tractor are known. Nowadays, the tractor typically comprises a so-called fifth wheel which connects to a semi-trailer Kingpin. Kingpins come in many guises, but a typical market size is the 2.0" (50.8mm) EEC approved type. This Kingpin is fully interchangeable and given strict maintenance is adhered to, it should last the life of a trailer.

In Australian English, the tractor unit is usually referred to as a prime-mover; and the combination of a prime-mover and trailer is known as a semi-trailer or semi. Semi-trailers with two trailer units are B-Doubles or road trains. A B-double consists of a prime mover towing two semi-trailers, where the first semi-trailer is connected to the prime mover by a fifth wheel coupling and the second semi-trailer is connected to the first semi-trailer by a fifth wheel coupling. A road train means a combination, other than a B-Double, consisting of a motor vehicle towing at least two trailers (counting as a single trailer) or a converter dolly supporting at least one semi-trailer.

In road haulage, semi-trailers predominate over full-trailers because of their flexibility. However, semi-trailers have disadvantages, the most predominant ones being that a rigid truck can be used without a trailer, whereas a semi-trailer tractor has no use on its own, a tractor-trailer composition is more likely to jackknife because the semi-trailer weighs significantly more than the tractor and lastly, since a semi-trailer rests on top of a tractor it has a higher centre of gravity which makes it more prone to tipping than a rigid vehicle.

In the European Union, the maximum length for goods vehicles is set by an EC directive and is limited to 16.5 meters for articulated vehicles and 18.75 meters for full-trailer combinations. The directive does not set an absolute weight limit but specifies certain limits which, if met, guarantee free circulation of vehicles within the EU. The harmonised maximum weight for international transport is 40 tonnes. The cargo capacity of combinations for container transport can also be expressed in so-called twenty-feet equivalence units (TEU's) which stands for the equivalent of a standard 20 ft long container.

For domestic transport some countries, even within the EU, permit longer and heavier goods vehicles with more than one articulation, or are at least considering such permission. For example, vehicles weighing up to 60 tonnes and up to 25.25 meters long, which can accommodate three TEU, are allowed in some countries. In the Netherlands, the directorate of the office for road traffic has issued a rule of policy for an exemption on the restrictions allowing such longer and heavier goods vehicles (abbreviated "LHV" or in Dutch "LZV"). However, such exemptions are typically applicable to particular roads only. This complicates the logistics and planning of transportation involving the use of LHV's and limits advantages of the semi-trailer in general and LHV in particular.

### OBJECT OF THE INVENTION

It is an object of the invention to provide a trailer, in particular a semi-trailer allowing a versatile use and of economic viable construction.

### SUMMARY OF THE INVENTION

In order to meet the object of the invention, a trailer has been devised of which the supporting frame has at an upstream position of its first lateral edge, a first connection site for removably connecting the first carrying arm, and at a downstream position a second connection site for removably connecting the first carrying arm; and at an upstream position of the second lateral edge, corresponding to the upstream position of the first lateral edge, a first connection site for removably connecting the second carrying arm, and at a downstream position corresponding to the downstream position of the first lateral edge a second connection site for removably connecting this carrying arm; wherein the trailer is provided with a carriage that is movable along the supporting frame from the first connection sites to the second connection sites, which carriage is provided with means to guide the carrying arms from the first connection site to the second connection site.

Movable carrying arms are known in the art of trailers, in particular semi-trailers for supporting containers. Such trailer typically do not have a full supporting surface, which is typical for closed trailers, but typically having a supporting frame comprising a first main beam and a second main beam, the main beams being horizontally spaced apart and extending in longitudinal direction between a front end of the frame (the upstream end) and a trailing end of the frame (the downstream end), the main beams typically forming a support area above these beams. The beams are provided with carrying arms that extend away from the support frame for carrying the load (the term "carrying" in this sense means "supporting", either by actually bearing a load on top of the arm, or by abutting a load to prevent movement thereof, or by any other configuration that provides support). Near their opposing ends the carrying arms are typically provided with means for receiving and removably connecting projections of containers (these means typically being commonly known twist-lock type connection means or locking pins). It is common that the carrying arms can be removed from their connecting site and positioned at another connecting site for accommodating various types of containers. These connecting sites can be present along the entire lateral edge of the frame, typically extending from an upstream goose-neck near the front end (which is typical for semi-trailers, or full-trailers having for example battery equipment on board) to the trailing end of the frame.

The present invention allows that one pair of carrying arms can be advantageously used for connection at various connection sites, while at the same time allowing easy movement from one site to another using a carriage. The carriage according to the invention is movable along the supporting frame (below or above that frame) at least from the first connection sites to the second connection sites. The carriage is provided with means to guide the carrying arms from the first connection site to the second connection site. Such guide means are not restricted to any particular form, they could be mechanical means such as locking elements, straps, reversible adhesive tapes, or could be electromechanical such us using electromagnets.

The invention is also embodied in a method to move a first and second carrying arm of a trailer according to any of the preceding claims, wherein the carrying arms are separate from the carriage, from the first connection sites to second connections sites, the method comprising disconnecting the first and second carrying arm from the supporting frame at the first connection sites, establishing an operative connection between the carrying arms and the carriage, moving the carrying arms in conjunction with the carriage to the second connection sites, and connecting the carrying arms to the supporting frame at the respective second connection sites. Applicant recognised that it is advantageous to have the carrying arms separate from the carriage since otherwise the carriage as a whole would need to be rigidly connected to the supporting frame. By having the arms separate from the carriage, it is only needed to connect the arms to the frame.

### DEFINITIONS

*To disconnect a first element from a second element*: is to alter the mutual configuration of the first and second element such that the first element can be freely moved independent of the second element.

*Removably connected*: a connection that allows repeated connecting and deconnecting without needing to damage parts, using either no tools or common tools for locking and unlocking mechanical connections such as bolt-nut connections, snap-fit connections, luer lock connections or any other connection designed for repeated connection and deconnection.

*Operative connection*: a connection that leads to the parts being connected to operate together as one, without necessarily being mechanically coupled to each other.

*Sliding*: moving over an element while maintaining in essence continuous contact.

### EMBODIMENTS OF THE INVENTION

In an embodiment the carriage is separate from the carrying arms. Applicant recognised that it is advantageous to have the carrying arms separate from the carriage since otherwise the carriage as a whole would need to be rigidly connected to the supporting frame to provide the necessary rigid connection between the arms and the frame. By having the arms separate from the carriage, it is only needed to connect the arms to the frame, which connection may simply be constituted by employing art known methods to connect removably connectable carrying arms to the supporting frame.

In another embodiment the carrying arms are slidingly enclosed by the carriage. A sliding enclosure allows an instant rigid connection in longitudinal direction of the trailer while at the same time allowing free (sliding) movement in the lateral direction, which movement is of particular advantage when the carriage is separate from the arms. In a further embodiment each carrying arm is constituted in essence as a rectangular hollow beam, slidingly enclosed by a corresponding profile of the carriage.

In an embodiment the carriage is provided with wheels to enable rolling movement over the supporting frame. This embodiment advantageously provides an easy way of moving the carriage by manual force.

In yet another embodiment the supporting frame at each connection site comprises a hollow profile that extends from a lateral edge towards the centre of the frame, the inner dimensions of the hollow profile corresponding to the outer dimensions of the corresponding carrying arm. In this embodiment the necessary rigid connection between the carrying arm and the support frame can be arrived at in a very simple way. Sliding the carrying arm into a pocket of the frame provides a rigid connection in the longitudinal direction of the trailer as well as the vertical direction to ensure stable carriage of the load.

In a further embodiment the trailer is provided with a means to mechanically lock a carrying arm to prevent lateral movement, when this arm is connected to the supporting frame at a connection site. Although lateral movement is typically prevented simply by having the arm carrying a load, which typically involves a connection between the load (a container) and the arms via a twist lock, it is advantageous to allow locking of the arm even when no load is present. In yet a further embodiment the means to mechanically lock the carrying arm, are comprised of an elongated element that is able to travel through the carriage, the carrying arm and the frame.

In another embodiment the carrying arms can be removably connected to the frame at multiple different positions to form carrying arms of multiple different widths. This can be advantageously used for various purposes, for example to accommodate containers of different widths, or to adjust the width at the front of the trailer in provide the necessary free movement area of a truck that takes various (angled) positions with respect to the trailer.

In yet another embodiment the carrying arms are each provided with an extension member to prolong the length of the corresponding carrying arm in a direction away from the frame, the extension member having a locking element for locking the load when being extended from the carrying arm. The extension member is in fact a sub-arm, which can be used to extend the length of the carrying arm when sliding the arm even further away from the frame is not an option, while a longer arm would be necessary to lock the load at a position further away from the frame. The extension member may be able to take any position between a first position wherein the extension member is completely moved towards the frame (the "unextended" configuration) and a second position wherein the extension member is moved away from the frame to extend the length of the carrying arm (the "extended") configuration, to lock the load at a position that is beyond the reach of the carrying arm itself. It is noted that the extension member of the carrying arm could also be used with a trailer wherein the arms are at fixed positions, or movable with other means that the carriage according to the invention.

In a further embodiment the extension member is at comprised within the carrying arm when being unextended. In this configuration the extension member may be slidingly connected within the carrying arm.

In another further embodiment a front surface of the extension member, when being in an extended configuration, in essence overlaps with a circle drawn around a kingpin of the trailer. An imaginary circle drawn around the kingpin may indicate the space needed for the truck to be able and freely move around the front part of the trailer. Any part of the trailer or load extending beyond this imaginary circle may prevent the truck from such free movement and should thus be avoided. The extension member has a front surface that substantially overlaps with this circle to obtain maximum strength and length, without extending beyond that circle.

The method according to the invention in a first embodiment is **characterised in that** carrying arms are continuously in operative connection with the carriage. In this embodiment allows swift movement of the arms along the supporting frame since the carriage is continuously in operative connection with the carrying arms.

In another embodiment of the method according to the invention the carriage maintains its position on the support frame by having the operative connection with the carrying arms. This embodiment overcomes the necessity of needing a support mechanism to lock the carriage on the supporting frame. The carriage is simply held in its place by being in operative connection with the arms which are connected to the frame.

### BRIEF DESCRIPTION OF THE FIGURES

Figure 1 schematically shows a trailer for use in road haulage
Figure 2 shows a detail of the trailer as depicted in Figure 1, viz. the upstream part of the supporting frame (the goose-neck)
Figure 3 schematically shows a carriage that is movable along the goose-neck as depicted in figure 2
Figure 4 schematically shows the carriage as depicted in figure 2 in rolling engagement with the supporting frame of the trailer
Figure 5 is a top projection of another embodiment of a trailer according to the invention, the projection schematically showing a front portion of the trailer wherein the carriage has a position corresponding to that of figure 4
Figure 6 is a schematic representation of a carrying arm provided with an extension member.
Figure 7 is a schematic representation of another type of carrying arm.

### Figure 1

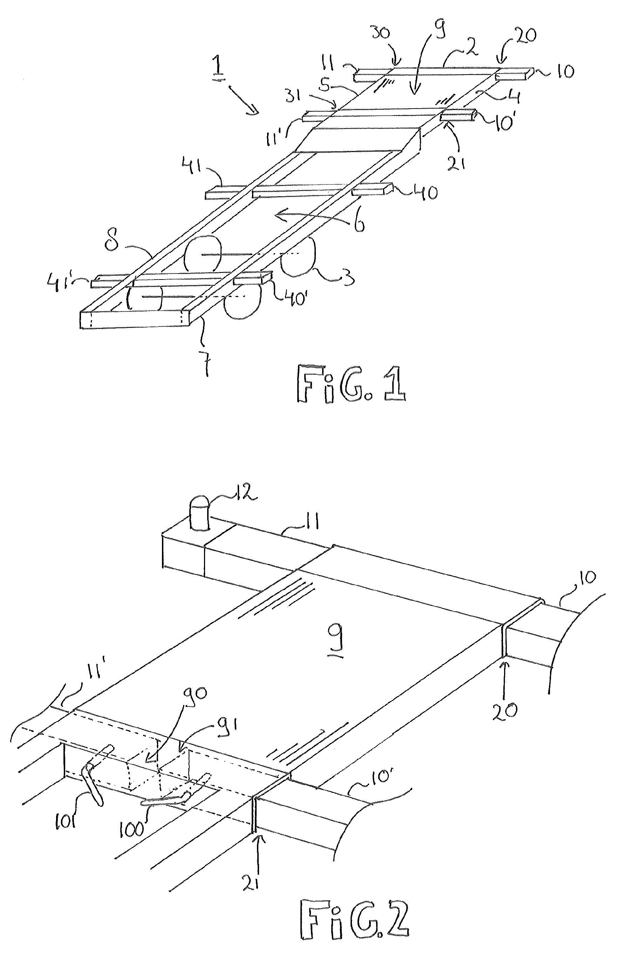

Figure 1 schematically shows a trailer 1 for use in road haulage. The trailer has a supporting frame 2 that comprises a wheeled downstream part 6, which is in essence constituted of main beams 7 and 8 and carrying arms 40 and 41. These arms are for supporting load such as a container. This downstream part of the trailer 1 is provided with wheels 3 to enable road transport. The supporting frame also comprises an upstream part 9, which is in essence a closed supporting subframe having lateral edges 4 and 5. This part is provided with a king pin (not shown) for connecting the trailer to a fifth wheel of a truck. The goose-neck 9 is provided with carrying arms 10, 10' and 11, 11' for supporting load. These arms 10, 10', 11 and 11' are removably connected to the supporting frame. Arms 10 and 11 are connected at corresponding connection sites 20 and 30 respectively. Arms 10' and 11' are connected at corresponding respective connection sites 21 and 31. The supporting frame 2 at these connection sites in each case comprises a hollow profile (not shown in figure 1; see elements 90 and 91 in figure 2 for clarification) that extends from a lateral edge towards the centre of the frame, the inner dimensions of the hollow profile corresponding to the outer dimensions of the corresponding carrying arm. This way, each arm is slidingly connected to the frame to arrive at a rigid connection in both longitudinal direction of the trailer and vertical direction. In order to lock each arm in lateral direction, the trailer is provided with locking means 100 (see figure 2).

### Figure 2

Figure 2 shows a detail of the trailer as depicted in Figure 1, viz. the upstream part 9 of the supporting frame (the goose-neck). In this figure, the supporting frame 2 is depicted, as well as carrying arms 10, 10', 11 and 11'. In this configuration the arms arm each connected to the supporting frame. For this, the arms are slided inwardly to reach a position wherein they can be locked to prevent lateral movement. As depicted in figure 2, arm 10' at site 21 is slided inwardly to engage hollow profile 91 which is part of the supporting frame 2. The same way, arm 11' is slided inwardly to engage hollow profile 90. The arms 10' and 11' are locked by using locking means 100 and 101 respectively. These means are in this embodiment simply pins that engage a corresponding hole in each of the arms 10' and 11'. As can be seen in figure 2, at the lateral end of each arm there is provided a common twist-lock pin 12 to secure a container to the corresponding arm.

### Figure 3

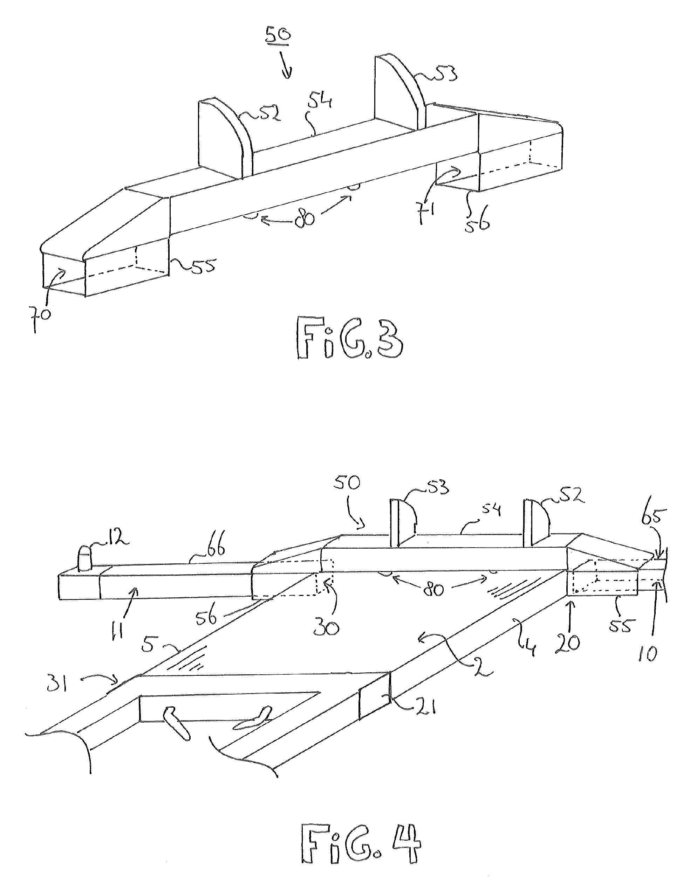

Figure 3 schematically shows a carriage 50 that is movable along the goose-neck as depicted in figure 2. The carriage 50 comprises a central beam 54 to which at the lateral opposing ends means 55 and 56 are welded to guide carrying arms while the carriage is moved along the goose-neck. These means 55 and 56 comprise hollow profiles 70 and 71 respectively. These means can slidingly engage the outer dimensions (profiles 65 and 66 respectively, see figure 4) of the carrying arms to provide for an operative connection between the arms and the carriage. The carriage is provided with wheels 80 to allow easy movement of the carriage over the supporting frame. The carriage is also provided with constraining elements 52 and 53. These elements can be used to position the load, typically a container against to have an additional support for allowing easy positioning of the container when loading the container on the trailer.

### Figure 4

Figure 4 schematically shows the carriage 50 as depicted in figure 2 in rolling engagement with the supporting frame 2 of the trailer 1. In this schematic representation the carriage 50 is positioned such that it coincides with the connections sites 20 and 30 of the supporting frame 2. In the set-up as shown in figure 4, both carrying arms 10 and 11 are slided to an outward position such that the arms are no longer connected to the supporting frame. The most inner ward parts of these arms only engage the guide means 55 and 56 respectively. This way, the arms are guided by the carriage. In the constitution as depicted in figure 4, the carriage can now be rolled over supporting frame 2 to coincide with corresponding connections sites 21 and 31. As soon as that position has been taken, the arms 10 and 11 can be slided inwardly to engage the hollow profiles 91 and 90 (see figure 2) respectively to provide for an operative connection with the supporting frame 2. After that, the carriage will also maintain its position in the longitudinal direction by still having the operative connection with the carrying arms since these arms with their outer profiles 65 and 66, slidingly engage the inner profiles 70 and 71 of the guide means 5 and 56.

In another embodiment (not shown) the carriage 50 can be locked to the supporting frame 2 when present at the connection sites 20, 21 or 30, 31 by using two (or more) locking elements (typically locking pins) that travel through the central beam 54, each of the arms 10 and 11, and the supporting chassis 2. The same locking elements can also be used to lock the arms 10 and 11 in the carriage when being moved over the chassis.

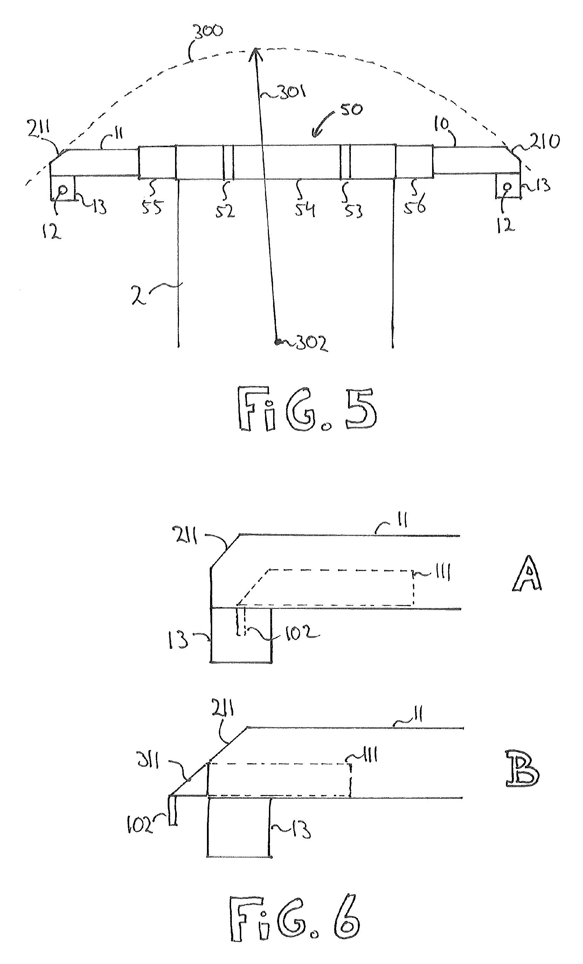

The arms 10 and 11 themselves may indeed have multiple slided positions at which they can be connected to the chassis. For example, when referring to the above mentioned (not shown) embodiment wherein locking pins are used to lock the arms in the carriage and to the chassis, if the arms are provided with a series of holes corresponding to the pins along their length, they can be locked at various outwardly slided positions. This can be advantageously used for various purposes, for example to accommodate containers of different widths, or to adjust the width at the front of the trailer in provide the necessary free movement area of a truck that takes various positions with respect to the trailer, for example for allowing the truck and trailer to take a sharp corner (see figure 5)

### Figure 5

Figure 5 is a top projection of another embodiment of a trailer according to the invention, the projection schematically showing a front portion of the trailer wherein the carriage has a position corresponding to that of figure 4. In this top projection, carriage 50 with its central beam 54, constraining elements 52 and 53, as well as guide means 55 and 56, can be seen, as are the outwardly extending carrying arms 10 and 11. In this embodiment, the carrying arms are provided with backwardly arranged (flipping) twistlock blocks 13, each provided with a twist lock pin 12. Front surfaces 210 and 211 of the arms are angled to substantially coincide with imaginary circle 300 having a radius 301 of 2040 mm (Dutch: "Kopstraal") around Kingpin 302 of frame 2. The truck (not shown) needs the space beyond this circle to freely rotate with respect to the trailer and its load.

For a 20 and 40ft container the length between the twistlock pins 12 is the same, approximately 210 cm. For a 45ft container, the outermost locking means of the container are provided at a mutual distance of approximately 225 cm. Extending the arms 10 and 11 even further however to reach this mutual distance is not an option since the arms would then extend beyond circle 300. In order to solve this problem, the arms are each provided with an internally arranged extension member (not shown, see figure 6) which is able to extend the length of an arm, without crossing the circle 300.

### Figure 6

Figure 6 is a schematic representation of a carrying arm 11 provided with an extension member 111. In figure 6A the left most portion of carrying arm 11 is depicted, clearly showing angled front surface 211. Also shown is twistlock block 13. Internally of the carrying arm 11 is the extension member 111 in its most inward (unextended) position. At the distal end of the extension member a locking pin 102 is provided to lock a load carried on the trailer. In this embodiment, a load is locked using either the twistlock block or the locking pin, depending on whether the load is standing on the twist lock block, or pushed against the arm 11 (while actually standing on the frame 2, the twistlock block being for example removed or flipped away) respectively. In figure 6B the same carrying arm 11 is shown, now with its extension member 111 in its most outward position. In this position, the front surface 311 of the extension member is in line with the angled front surface 211 of the carrying arm 11. Both surfaces substantially overlap with circle 300 (not shown; see figure 5) in the sense of the present application. In this extended configuration, although the arm is at the same position with respect to the frame (not shown) as in figure 6A, the locking pin 102 is able to lock a load at a position that is slightly further away from the frame (typically about 80 mm further away), while the arm and extension member are still within the allowed circle 300. The twist lock block 13 in this constitution can be flipped away, removed, or (in the shown configuration) be taken up in a cavity of the load.

### Figure 7

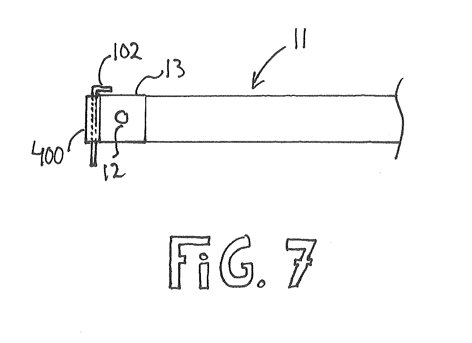

Figure 7 is a schematic representation of another type of carrying arm 11. This type of arm 11 can also be favourable used when not using a carriage according to the invention. In this embodiment the twist lock block 13 is in line with the arm 11 itself. At the distal end of the arm 11 a tubular member 400 is provided, which member is a guide for locking pin 102. This arm can be used for either carrying a load that is present on top of the arm 11 and fixed using the twist lock pen 12, or for carrying a load that is pushed against the arm 11 (and actually carried on frame 2, not shown), and then locked by using locking pin 102. The arm 11 may be extended from the frame at various lengths.

## Claims

1. A trailer (1) for use in road haulage, the trailer having a supporting frame (2) for carrying a load, the frame having at a first lateral edge (4) a first carrying arm (10) for supporting the load, which arm extends from the frame, and at a second lateral edge (5) opposite to the first lateral edge a second carrying arm (11) for supporting the load, which arm extends from the frame, the first and second carrying arms being removably connected to the frame, the frame having:
- at an upstream position of the first lateral edge, a first connection site (20) for removably connecting the first carrying arm, and at a downstream position a second connection site (21) for removably connecting the first carrying arm;
- at an upstream position of the second lateral edge, corresponding to the upstream position of the first lateral edge, a first connection site (30) for removably connecting the second carrying arm , and at a downstream position corresponding to the downstream position of the first lateral edge a second connection site (31) for removably connecting this carrying arm;
wherein the trailer is provided with a carriage (50) that is movable along the supporting frame from the first connection sites to the second connection sites, which carriage is provided with means (55, 56) to guide the carrying arms from the first connection site to the second connection site.

2. A trailer according to claim 1, **characterised in that** the carriage is separate from the carrying arms.

3. A trailer according to any of the preceding claims, **characterised in that** the carrying arms are slidingly enclosed by the carriage.

4. A trailer according to claim 3, **characterised in that** each carrying arm is constituted in essence as a rectangular hollow beam (65, 66), slidingly enclosed by a corresponding profile (70, 71) of the carriage.

5. A trailer according to any of the preceding claims, **characterised in that** the carriage is provided with wheels (80) to enable rolling movement over the supporting frame.

6. A trailer according to any of the preceding claims, **characterised in that** the supporting frame at each connection site comprises a hollow profile (90, 91) that extends from a lateral edge towards the centre of the frame, the inner dimensions of the hollow profile corresponding to the outer dimensions of the corresponding carrying arm.

7. A trailer according to claim 6, **characterised in that** the trailer is provided with a means (100, 101) to mechanically lock a carrying arm to prevent lateral movement, when this arm is connected to the supporting frame at a connection site.

8. A trailer according to claim 6, **characterised in that** the means to mechanically lock the carrying arm are comprised of an elongated element that is able to travel through the carriage, the carrying arm and the frame.

9. A trailer according to any of the preceding claims, **characterised in that** the carrying arms can be removably connected to the frame at multiple different positions to form carrying arms of multiple different widths.

10. A trailer according to any of the preceding claims, **characterised in that** the carrying arms are each provided with an extension member (111) to prolong the length of the corresponding carrying arm in a direction away from the frame, the extension member having a locking element (102) for locking the load when being extended from the carrying arm.

11. A trailer according to claim 10, **characterised in that** the extension member is at comprised within the carrying arm when being unextended.

12. A trailer according to any of the claims 10 or 11, **characterised in that** a front surface (211) of the extension member, when being in an extended configuration, in essence overlaps with a circle (300) drawn around a kingpin (302) of the trailer.

13. A method to move a first and second carrying arm of a trailer according to any of the preceding claims, wherein the carrying arms are separate from the carriage, from the first connection sites to second connections sites, the method comprising:
- disconnecting the first and second carrying arm from the supporting frame at the first connection sites,
- establishing an operative connection between the carrying arms and the carriage,
- moving the carrying arms in conjunction with the carriage to the second connection sites,
- connecting the carrying arms to the supporting frame at the respective second connection sites.

14. A method according to claim 13, **characterised in that** carrying arms are continuously in operative connection with the carriage.

15. A method according to any of the claims 13 and 14, **characterised in that** the carriage maintains its position on the support frame by having the operative connection with the carrying arms.
